# EUROPÄISCHE PATENTSCHRIFT

(11) **EP 0 445 537 B1**
(45) Veröffentlichungstag und Bekanntmachung des Hinweises auf die Patenterteilung: **03.05.1995**
(21) Anmeldenummer: 91101557.6
(22) Anmeldetag: 06.02.1991
(51) Int. Cl.: C03C 8/14, C03C 8/16, C03C 8/20, C04B 41/50

(54) **Präparat zur Verwendung bei der Herstellung von matten Edelmetall-Dekorationen**
Composition for use in making matt precious metal decorations
Composition pour utilisation à la fabrication de décorations mates en métal précieux

(30) Priorität: 07.03.1990 DE 4007156
(43) Veröffentlichungstag der Anmeldung: 11.09.1991
(73) Patentinhaber: W.C. Heraeus GmbH, D-63405 Hanau (DE)
(72) Erfinder: Wild, Wolfgang, W-6450 Hanau (DE); Bauer, Frank, W-6450 Hanau 8 (DE); Landgraf, Günter, Dr., W-6450 Hanau (DE)

(56) Entgegenhaltungen:
- EP-A- 0 240 720
- DE-A- 1 927 019
- GB-A- 2 099 760
- US-A- 2 278 867
- US-A- 4 624 934
- CHEMICAL ABSTRACTS, vol. 112, No. 6, 5 February 1990 Columbus, Ohio, USA Seite 356; ref. no. 41403H

## Beschreibung

Die Erfindung betrifft ein Präparat, das eine Mischung aus Borsilicat-Glasurfritte und Metalloxid und ein alkydharzhaltiges organisches Medium enthält, zur Verwendung bei der Herstellung von matten Edelmetall-Dekorationen aus Glanzedelmetallpräparaten auf silicatischem Material.

Die Erfindung geht aus von der deutschen Offenlegungsschrift 31 22 546 und der deutschen Patentschrift 36 11 273, die die Herstellung matter Edelmetall-Dekorationen unter Verwendung von Glanzedelmetallpräparaten anstelle der üblicherweise dafür benutzten Puder- und Polieredelmetallpräparate mit höherem Edelmetall-Gehalt betreffen.

Aus der deutschen Offenlegungsschrift 31 22 546 ist ein keramisches Abziehbild bekannt, das eine Bildschicht aus einem Glanzedelmetallpräparat und eine zwischen dem Trägerpapier und dieser Bildschicht angeordnete Unterlageschicht aufweist. Die Unterlageschicht wird aus einem Präparat, das eine Mischung aus 20 50 Gewichts-% Bleiborsilicat-Glasurfritte und 50 - 80 Gewichts-% eines Gemisches aus vorzugsweise 50 -75 Gewichts-% Zinndioxid, 15 - 35 Gewichts-% Zinkoxid und 10 - 15 Gewichts-% Aluminiumoxid, Eisenoxid und Chromoxid und ein Alkydharz mit einem Ölgehalt von 60 - 70 Gewichts-% enthält, hergestellt. Sie verleiht der eingebrannten, sonst glänzenden Edelmetall-Dekoration eine feine, matte Oberfläche und so dem damit dekorierten Gegenstand ein wertvolleres Aussehen.

Das in der deutschen Patentschrift 36 11 273 beschriebene Verfahren zur Herstellung matter Edelmetall-Dekorationen auf Keramik und Porzellan mittels Glanzedelmetallpräparaten benutzt eine Unterlageschicht, die sich aus
a) 50 - 80 Gewichts-% eines Gemisches von 30 - 80 Gewichts-% einer bleifreien Borsilicat-Glasurfritte mit 20 - 70 Gewichts-% Titandioxid-Pulver und
b) 20 - 50 Gewichts-% eines Gemisches von 40 - 60 Gewichts-% eines modifizierten Alkydharzes mit einem Ölgehalt von 20 - 40 Gewichts-% und einem Feststoffgehalt von 40 - 60 Gewichts-% mit 40 - 60 Gewichts-% eines aromatischen Kohlenwasserstoffs als organisches Medium zusammensetzt.

Es ist die Aufgabe der Erfindung, ein Präparat der eingangs charakterisierten Art zu finden, mit dem sich aus Glanzedelmetallpräparaten matte und mechanisch beständige Edelmetall-Dekorationen herstellen lassen. Weiterhin soll das Präparat, wenn es zur Herstellung der Unterlageschicht keramischer Abziehbilder benutzt wird, eine zuverlässige, keine Brennfehler verursachende Applikation der Abziehbilder ermöglichen.

Das die Lösung der Aufgabe darstellende Präparat ist dadurch gekennzeichnet, daß es aus 50 - 80 Gewichts-% der Mischung aus 30 - 80 Gewichts-% Borsilicat-Glasurfritte und 20 - 70 Gewichts-% Zinndioxid, Cerdioxid und/oder Zirkoniumdioxid als Metalloxid und 20 - 50 Gewichts-% des organischen Mediums besteht und daß das organische Medium 20 - 50 Gewichts-% Alkydharz und 3 - 30 Gewichts-% eines Zusatzes aus Naturharz, Acrylharz und/oder Weichmacher enthält.

Bewährt hat sich das Präparat, wenn das organische Medium
a) 5 - 20 Gewichts-% Naturharz als Zusatz,
b) 3 - 25 Gewichts-% Acrylharz als Zusatz,
c) 5 - 30 Gewichts-% Weichmacher als Zusatz oder
d) 8 - 30 Gewichts-% eines Zusatzes aus 10 - 60 Gewichts-% Acrylharz und 40 - 90 Gewichts-% Weichmacher
enthält.

Das in dem Präparat enthaltene Metalloxid kann aus Zinndioxid, Cerdioxid oder Zirkoniumdioxid oder aus einem Gemisch aus mindestens zwei dieser Oxide bestehen. Liegt ein Oxid-Gemisch vor, so kann der Anteil der einzelnen Oxide darin frei gewählt werden.

Bevorzugte Ausführungsformen der Erfindung ergeben sich jedoch, wenn die Mischung aus
a) 40 - 60 Gewichts-% Glasurfritte und 40 - 60 Gewichts-% Zinndioxid, Cerdioxid oder Zirkoniumdioxid als Metalloxid,
b) 40 - 60 Gewichts-% Glasurfritte und 40 - 60 Gewichts-% eines Gemisches aus 60 - 95 Gewichts-% Zinndioxid und 5 - 40 Gewichts-% Cerdioxid als Metalloxid oder
c) 40 - 60 Gewichts-% Glasurfritte und 40 - 60 Gewichts-% eines Gemisches aus 60 - 95 Gewichts-% Zinndioxid und 5 - 40 Gewichts-% Zirkoniumdioxid als Metalloxid
besteht.

In einer weiteren bevorzugten Ausführungsform der Erfindung besteht die Glasurfritte aus 40 - 60 Gewichts-% SiO₂, 15 - 35 Gewichts-% B₂O₃, 0 - 20 Gewichts-% Al₂O₃, 2 - 10 Gewichts-% Li₂O, 0 - 8 Gewichts-% Na₂O, 4 - 12 Gewichts-% K₂O, 0 - 4 Gewichts-% MgO und 1 - 5 Gewichts-% ZnO, zum Beispiel aus 50 Gewichts-% SiO₂, 24,7 Gewichts-% B₂O₃, 10 Gewichts-% Al₂O₃, 2 Gewichts-% Li₂O, 4 Gewichts-% Na₂O, 8 Gewichts-% K₂O, 0,3 Gewichts-% MgO und 1 Gewichts-% ZnO.

Zur Verwendung in dem organischen Medium des Präparats eignen sich sowohl mittelölige als auch langölige Alkydharze und als Naturharze zum Beispiel Kolophonium und Lärchenterpentin. Als Weichmacher haben sich Kampfer, Phthalsäureester und Carbamidsäureester besonders bewährt. Daneben enthält das organische Medium noch ein oder mehrere an sich bekannte organische Verdünnungsmittel, wie zum Beispiel Verdünnungsmittel auf Kohlenwasserstoff-Basis und Cyclohexanol.

Die unter Verwendung des Präparats aus Glanzedelmetallpräparaten, zum Beispiel Glanzgold-, Glanzpalladium- und Glanzplatinpräparate, erzeugten Edelmetall-Dekorationen zeichnen sich - wie Abriebversuche zeigen - durch ihre sehr gute mechanische Beständigkeit und durch ihre feine matte Oberfläche, die frei von Brennfehlern ist, aus.

Auf Weichporzellan (Bone China, Vitreous China) können Unterlageschichten aus dem erfindungsgemäßen Präparat und Glanzedelmetallpräparat, ohne daß in der Dekoration Risse auftreten, bei höherer Temperatur eingebrannt werden als bei Verwendung der titandioxidhaltigen Unterlageschicht gemäß deutscher Patentschrift 36 11 273.

Überraschenderweise werden durch die Kombination des Alkydharzes mit dem Naturharz, Acrylharz und/oder Weichmacher nicht nur die Benetzung der Feststoff-Mischung durch das organische Medium und damit die Homogenität des Präparats, sondern auch die anwendungstechnischen Eigenschaften der unter Verwendung des Präparats hergestellten Abziehbilder verbessert. Die Abziehbilder lassen sich infolge der guten Adhäsion der Unterlageschicht an dem silicatischen Material zuverlässig applizieren. Während des Brennens haftet die Unterlageschicht ausreichend lange - bis zum Sintern der Glasurfritte - an dem silicatischen Material, so daß durch Abheben verursachte Fehler in der Dekoration nicht auftreten. Außerdem können die unter Verwendung des den Weichmacher enthaltenden Präparats hergestellten Abziehbilder, ohne ihre Elastizität zu verlieren, länger gelagert werden.

Zur näheren Erläuterung werden im folgenden einige beispielhafte Ausführungsformen des Präparats gemäß der Erfindung, ihre Anwendung zusammen mit Glanzedelmetallpräparaten zur Herstellung von matten Edelmetall-Dekorationen auf Hart- und Weichporzellan und Abriebversuche zur Bestimmung der mechanischen Beständigkeit der Dekorationen beschrieben.

Die in den Beispielen benutzte Glasurfritte besteht aus 50 Gewichts-% SiO₂, 24,7 Gewichts-% B₂O₃, 10 Gewichts-% Al₂O₃, 2 Gewichts-% Li₂O, 4 Gewichts-% Na₂O, 8 Gewichts-% K₂O, 0,3 Gewichts-% MgO und 1 Gewichts-% ZnO.

### Beispiel 1

Präparat aus
a) 75 Gewichts-% einer Mischung aus 40 Gewichts-% Glasurfritte und 60 Gewichts-% Cerdioxid
   und
b) 25 Gewichts-% eines organischen Mediums aus 30 Gewichts-% mittelöligem Alkydharz, 60 Gewichts-% Kohlenwasserstoff-Verdünnungsmittel (Shellsol AB) und 10 Gewichts-% Lärchenterpentin.

### Beispiel 2

Präparat aus
a) 75 Gewichts-% einer Mischung aus 40 Gewichts-% Glasurfritte und 60 Gewichts-% Zirkoniumdioxid
   und
b) 25 Gewichts-% eines organischen Mediums aus 30 Gewichts-% mittelöligem Alkydharz, 30 Gewichts-% Kohlenwasserstoff-Verdünnungsmittel (Shellsol AB), 30 Gewichts-% Cyclohexanol und 10 Gewichts-% Kampfer.

### Beispiel 3

Präparat aus
a) 75 Gewichts-% einer Mischung aus 40 Gewichts-% Glasurfritte und 60 Gewichts-% Zinndioxid
   und
b) 25 Gewichts-% eines organischen Mediums aus 30 Gewichts-% langöligem Alkydharz, 66 Gewichts-% Kohlenwasserstoff-Verdünnungsmittel (Shellsol AB) und 4 Gewichts-% Acrylharz (Plexigum P 24).

### Beispiel 4

Präparat aus
a) 75 Gewichts-% einer Mischung aus 40 Gewichts-% Glasurfritte und 60 Gewichts-% Zinndioxid
   und
b) 25 Gewichts-% eines organischen Mediums aus 30 Gewichts-% langöligem Alkydharz, 60 Gewichts-% Kohlenwasserstoff-Verdünnungsmittel (Shellsol AB), 4 Gewichts-% Lärchenterpentin und 6 Gewichts-% Acrylharz (Plexigum P 24).

### Beispiel 5

Präparat aus
a) 75 Gewichts-% einer Mischung aus 40 Gewichts-% Glasurfritte und 60 Gewichts-% Zinndioxid
   und
b) 25 Gewichts-% eines organischen Mediums aus 20 Gewichts-% langöligem Alkydharz, 55 Gewichts-% Kohlenwasserstoff-Verdünnungsmittel (Shellsol AB), 10 Gewichts-% Acrylharz (Plexigum P 24) und 15 Gewichts-% Kampfer.

### Beispiel 6

Präparat aus
a) 75 Gewichts-% einer Mischung aus 40 Gewichts-% Glasurfritte und 60 Gewichts-% eines Gemisches aus 60 Gewichts-% Zinndioxid und 40 Gewichts-% Cerdioxid
   und
b) 25 Gewichts-% eines organischen Mediums aus 30 Gewichts-% langöligem Alkydharz, 66 Gewichts-% Kohlenwasserstoff-Verdünnungsmittel (Shellsol AB) und 4 Gewichts-% Acrylharz (Plexigum P 24).

### Beispiel 7

Präparat aus
a) 75 Gewichts-% einer Mischung aus 40 Gewichts-% Glasurfritte und 60 Gewichts-% eines Gemisches aus 60 Gewichts-% Zinndioxid und 40 Gewichts-% Zirkoniumdioxid
   und
b) 25 Gewichts-% eines organischen Mediums aus 30 Gewichts-% langöligem Alkydharz, 66 Gewichts-% Kohlenwasserstoff-Verdünnungsmittel (Shellsol AB) und 4 Gewichts-% Acrylharz (Plexigum P 24).

Die in den Beispielen beschriebenen Präparate werden jeweils auf Teller aus Hartporzellan und Teller aus Weichporzellan zur Erzeugung einer Unterlageschicht aufgedruckt. Nach dem Trocknen folgt das Aufdrucken eines handelsüblichen Glanzgoldpräparats. Die Teller werden bei 830°C (Hartporzellan) beziehungsweise bei 760°C (Weichporzellan) gebrannt und weisen danach Gold-Dekorationen mit seidenmatter Oberfläche ohne jede Risse auf.

Die mechanische Beständigkeit der Gold-Dekorationen von unter Verwendung des in Beispiel 3 beschriebenen Präparats und - zum Vergleich dazu - von entsprechend, jedoch unter Verwendung der titandioxidhaltigen Unterlageschicht gemäß deutscher Patentschrift 36 11 273 dekorierten Tellern wird bestimmt. Dazu werden auf die Dekoroberflächen der auf einer Drehscheibe befindlichen Teller
A) ein Artitex-Goldradierer Typ SC 400 der Firma Chemische Fabrik Dr. Lehmann & Co., Hamburg,
B) ein in eine Haltevorrichtung eingespannter und mit einem feinen Kunststoff-Granulat beschichteter Polierschwamm mit einer Belastung von 200 g beziehungsweise
C) ein in eine Haltevorrichtung eingespannter Widia-Bohrer, Durchmesser 2 Millimeter, mit einer Belastung von 160 g
aufgesetzt und nach jeweils 500 und 1000 Umdrehungen (Methoden A und B) bzw. 5, 10 und 20 Umdrehungen der Teller (Methode C) die Dekoroberflächen visuell geprüft.

Wie die in den Tabellen I und II zusammengefaßten Ergebnisse der Prüfung zeigen, besitzen die unter Verwendung des erfindungsgemäßen Präparats erzeugten Edelmetall-Dekorationen eine sehr gute mechanische Beständigkeit.

**Tabelle I**

| Methode | Beispiel | Dekoroberfläche | | | |
|---|---|---|---|---|---|
| | | Weichporzellan | | Hartporzellan | |
| | | 500 U | 1000 U | 500 U | 1000 U |
| A | 3 | nicht beschädigt | nicht beschädigt | nicht beschädigt | nicht beschädigt |
| | Vergleich | nicht beschädigt | leicht beschädigt | nicht beschädigt | leicht beschädigt |
| B | 3 | nicht beschädigt | nicht beschädigt | nicht beschädigt | nicht beschädigt |
| | Vergleich | nicht beschädigt | teilweise abgerieben | nicht beschädigt | teilweise abgerieben |
| U = Umdrehungen | | | | | |

**Tabelle II**

| Methode | Beispiel | Dekoroberfläche | | | | | |
|---|---|---|---|---|---|---|---|
| | | Weichporzellan | | | Hartporzellan | | |
| | | 5 U | 10 U | 20 U | 5 U | 10 U | 20 U |
| C | 3 | nicht beschädigt | nicht beschädigt | nicht beschädigt | nicht beschädigt | nicht beschädigt | nicht beschädigt |
| | Vergleich | leicht beschädigt | angekratzt | zerkratzt | leicht beschädigt | angekratzt | zerkratzt |
| U = Umdrehungen | | | | | | | |

## Patentansprüche

1. Präparat, das eine Mischung aus Borsilicat-Glasurfritte und Metalloxid und ein alkydharzhaltiges organisches Medium enthält, zur Verwendung bei der Herstellung von matten Edelmetall-Dekorationen aus Glanzedelmetallpräparaten auf silicatischem Material, dadurch gekennzeichnet, daß es aus 50 - 80 Gewichts-% der Mischung aus 30 - 80 Gewichts-% Borsilicat-Glasurfritte und 20 - 70 Gewichts-% Zinndioxid, Cerdioxid und/oder Zirkoniumdioxid als Metalloxid und 20 - 50 Gewichts-% des organischen Mediums besteht und daß das organische Medium 20 - 50 Gewichts-% Alkydharz und 3 - 30 Gewichts-% eines Zusatzes aus Naturharz, Acrylharz und/oder Weichmacher enthält.

2. Präparat nach Anspruch 1, dadurch gekennzeichnet, daß der Zusatz aus 5 - 20 Gewichts-% Naturharz besteht.

3. Präparat nach Anspruch 1, dadurch gekennzeichnet, daß der Zusatz aus 3 - 25 Gewichts-% Acrylharz besteht.

4. Präparat nach Anspruch 1, dadurch gekennzeichnet, daß der Zusatz aus 5 - 30 Gewichts-% Weichmacher besteht.

5. Präparat nach Anspruch 1, gekennzeichnet durch 8 - 30 Gewichts-% eines Zusatzes aus 10 - 60 Gewichts-% Acrylharz und 40 - 90 Gewichts-% Weichmacher.

6. Präparat nach einem der Ansprüche 1 bis 5, dadurch gekennzeichnet, daß die Mischung aus 40 - 60 Gewichts-% Glasurfritte und 40 - 60 Gewichts-% Zinndioxid, Cerdioxid oder Zirkoniumdioxid als Metalloxid besteht.

7. Präparat nach einem der Ansprüche 1 bis 5, dadurch gekennzeichnet, daß die Mischung aus 40 - 60 Gewichts-% Glasurfritte und 40 - 60 Gewichts-% eines Gemisches aus 60 - 95 Gewichts-% Zinndioxid und 5 - 40 Gewichts-% Cerdioxid als Metalloxid besteht.

8. Präparat nach einem der Ansprüche 1 bis 5, dadurch gekennzeichnet, daß die Mischung aus 40 - 60 Gewichts-% Glasurfritte und 40 - 60 Gewichts-% eines Gemisches aus 60 - 95 Gewichts-% Zinndioxid und 5 - 40 Gewichts-% Zirkoniumdioxid als Metalloxid besteht.

9. Präparat nach einem der Ansprüche 1 bis 8, dadurch gekennzeichnet, daß die Glasurfritte aus 40 - 60 Gewichts-% SiO₂, 15 - 35 Gewichts-% B₂O₃, 0 - 20 Gewichts-% Al₂O₃, 2 - 10 Gewichts-% Li₂O, 0 - 8 Gewichts-% Na₂O, 4 - 12 Gewichts-% K₂O, 0 - 4 Gewichts-% MgO und 1 - 5 Gewichts-% ZnO besteht.

10. Präparat nach Anspruch 9, dadurch gekennzeichnet, daß die Glasurfritte aus 50 Gewichts-% SiO₂, 24,7 Gewichts-% B₂O₃, 10 Gewichts-% Al₂O₃, 2 Gewichts-% Li₂O, 4 Gewichts-% Na₂O, 8 Gewichts-% K₂O, 0,3 Gewichts-% MgO und 1 Gewichts-% ZnO besteht.

11. Verwendung des Präparats nach einem der Ansprüche 1 bis 10 für die Herstellung einer zur Aufnahme eines Glanzedelmetallpräparats dienenden Unterlageschicht auf Weichporzellan.

## Claims

1. A preparation, which contains a mixture of borosilicate-glaze frit and metallic oxide and an organic medium containing alkyd resin, for use in the manufacture of mat precious metal decorations from brilliant precious metal preparations on silicate material, characterised in that it consists of 50 - 80 % by weight of the mixture of 30 - 80 % by weight borosilicate glee frit and 20 - 70 % by weight tin dioxide, cerium dioxide and/or zirconium dioxide as metallic oxide and 20 - 50 % by weight of the organic medium, and that the organic medium contains 20 - 50 % by weight alkyd resin and 3 - 30 % by weight of an additive of natural resin, acrylic resin and/or plasticizer.

2. A preparation according to Claim 1, characterised in that the additive consists of 5 - 20 % by weight natural resin.

3. A preparation according to Claim 1, characterised in that the additive consists of 3 - 25 % by weight acrylic resin.

4. A preparation according to Claim 1, characterised in that the additive consists of 5 - 30 % by weight plasticizer.

5. A preparation according to Claim 1, characterised by 8-30 % by weight of an additive of 10 - 60 % by weight acrylic resin and 40 - 90 % by weight plasticizer.

6. A preparation according to one of Claims 1 to 5, characterised in that the mixture consists of 40 - 60 % by weight glaze frit and 40 - 60 % by weight tin dioxide, cerium dioxide or zirconium dioxide as metallic oxide.

7. A preparation according to one of Claims 1 to 5, characterised in that the mixture consists of 40 - 60 % by weight glaze frit and 40 - 60 % by weight of a mixture of 60 - 95 % by weight tin dioxide and 5-40 % by weight cerium dioxide as metallic oxide.

8. A preparation according to one of Claims 1 to 5, characterised in that the mixture consists of 40 - 60 % by weight glaze frit and 40 - 60 % by weight of a mixture of 60 - 95 % by weight tin dioxide and 5 - 40 % by weight zirconium dioxide as metallic oxide.

9. A preparation according to one of Claims 1 to 8, characterised in that the glaze frit consists of 40 - 60 % by weight SiO₂, 15 - 35 % by weight B₂O₃, 0 - 20 % by weight Al₂O₃, 2 - 10 % by weight Li₂O, 0 - 8 % by weight Na₂O, 4 - 12 % by weight K₂O, 0 - 4 % by weight MgO and 1- 5 % by weight ZnO.

10. A preparation according to Claim 9, characterised in that the glaze frit consists of 50 % by weight SiO₂ , 24.7 % by weight B₂O₃ , 10 % by weight Al₂O₃ , 2 % by weight Li₂O, 4 % by weight Na₂O, 8 % by weight K₂O, 0.3 % by weight MgO and 1 % by weight ZnO.

11. The use of the preparation according to one of Claims 1 to 10 for the manufacture of a base layer on soft porcelain, serving to receive a brilliant precious metal preparation.

## Revendications

1. Composition qui contient un mélange constitué d'une fritte de glaçure en borosilicate et d'un oxyde métallique et un milieu organique contenant une résine alkyde, pour l'utilisation lors de la préparation de décorations mates en métal précieux à partir de compositions de métal précieux brillant sur un matériau silicaté, caractérisée en ce qu'elle est constituée de 50-80 % en poids du mélange consistant en 30-80 % en poids d'une fritte de glaçure en borosilicate et en 20-70 % en poids de dioxyde d'étain, de dioxyde de cérium et/ou de dioxyde de zirconium comme oxyde métallique et de 20-50 % en poids du milieu organique et en ce que le milieu organique contient 20-50 % en poids d'une résine alkyde et 3-30 % en poids d'un additif constitué de résine naturelle, de résine acrylique et/ou de plastifiant.

2. Composition selon la revendication 1, caractérisée en ce que l'additif est constitué de 5-20 % en poids de résine naturelle.

3. Composition selon la revendication 1, caractérisée en ce que l'additif est constitué de 3-25 % en poids de résine acrylique.

4. Composition selon la revendication 1, caractérisée en ce que l'additif est constitué de 5-30 % en poids de plastifiant.

5. Composition selon la revendication 1, caractérisée par 8-30 % en poids d'un additif constitué de 10-60 % en poids de résine acrylique et de 40-90 % en poids de plastifiant.

6. Composition selon l'une quelconque des revendications 1 à 5, caractérisée en ce que le mélange est constitué de 40-60 % en poids d'une fritte de glaçure et de 40-60 % en poids de dioxyde d'étain, de dioxyde de cérium ou de dioxyde de zirconium comme oxyde métallique.

7. Composition selon l'une quelconque des revendications 1 à 5, caractérisée en ce que le mélange est constitué de 40-60 % en poids d'une fritte de glaçure et de 40-60 % en poids d'un mélange consistant en 60-95 % en poids de dioxyde d'étain et en 5-40 % en poids de dioxyde de cérium comme oxyde métallique.

8. Composition selon l'une quelconque des revendications 1 à 5, caractérisée en ce que le mélange est constitué de 40-60 % en poids d'une fritte de glaçure et de 40-60 % en poids d'un mélange consistant en 60-95 % en poids de dioxyde d'étain et en 5-40 % en poids de dioxyde de zirconium comme oxyde métallique.

9. Composition selon l'une quelconque des revendications 1 à 8, caractérisée en ce que la fritte de glaçure est constituée de 40-60 % en poids de SiO₂, de 15-35 % en poids de B₂O₃, de 0-20 % en poids d'Al₂O₃, de 2-10 % en poids de Li₂O, de 0-8 % en poids de Na₂O, de 4-12 % en poids de K₂O, de 0-4 % en poids de MgO et de 1-5 % en poids de ZnO.

10. Composition selon la revendication 9, caractérisée en ce que la fritte de glaçure est constituée de 50 % en poids de SiO₂, de 24,7 % en poids de B₂O₃, de 10 % en poids d'Al₂O₃, de 2 % en poids de Li₂O, de 4 % en poids de Na₂O, de 8 % en poids de K₂O, de 0,3 % en poids de MgO et de 1 % en poids de ZnO.

11. Utilisation de la composition selon l'une quelconque des revendications 1 à 10 pour la préparation d'une couche de base sur de la porcelaine tendre servant à appliquer une composition de métal précieux brillant.
